# EUROPÄISCHE PATENTSCHRIFT

(11) **EP 2 432 617 B1**
(45) Veröffentlichungstag und Bekanntmachung des Hinweises auf die Patenterteilung: **21.05.2014**
(21) Anmeldenummer: 10718032.5
(22) Anmeldetag: 28.04.2010
(51) Int. Cl.: B23K 37/02

(54) **VORRICHTUNG ZUM SCHUTZ EINES GEHÄUSES EINER SCHWEIßKOMPONENTE**
DEVICE FOR PROTECTING THE HOUSING OF A WELDING COMPONENT
DISPOSITIF DESTINE A PROTEGER LE BOITIER D'UN ELEMENT DE SOUDAGE

(30) Priorität: 18.05.2009 AT 7762009
(43) Veröffentlichungstag der Anmeldung: 28.03.2012
(73) Patentinhaber: Fronius International GmbH, 4643 Pettenbach (AT)
(72) Erfinder: FLATTINGER, Günther, 4061 Pasching (AT); HUEMER, Julia, 4560 Kirchdorf (AT); OBERROITHER, Peter, 4600 Wels (AT); OBERZAUCHER, Friedrich, 4600 Wels (AT); STADLER, Manfred, 4643 Pettenbach (AT)
(74) Vertreter: Sonn & Partner Patentanwälte
(86) Internationale Anmeldenummer: PCT/AT2010/000134
(87) Internationale Veröffentlichungsnummer: WO 2010/132905

(56) Entgegenhaltungen:
- WO-A1-2008/033653
- US-A1- 2005 193 926
- US-A1- 2007 196 202

## Beschreibung

Die Erfindung betrifft eine Schweißkomponente mit einer Vorrichtung zum Schutz dessen Gehäuses während der Veränderung dessen Position.

Beispielsweise kommt es bei Schweißverfahren häufig vor, dass der Benutzer Komponenten, wie beispielsweise eine Schweißdrahtrolle oder ein Drahtvorschubgerät, zum Schweißort transportiert, wobei der Transport durch Nachziehen der jeweiligen Komponente erfolgen kann. Durch das Ziehen oder Schieben der Komponenten am Boden werden diese beschädigt.

Die WO 2008/033653 A1 zeigt eine Schweißvorrichtung, welche zur leichteren Veränderung der Position einen Rahmen mit Rädern aufweist.

Die Aufgabe der Erfindung liegt darin, einen optimalen Schutz für ein Gehäuse bzw. die darin angeordnete Komponente zu schaffen, wenn diese beispielsweise durch einen Schweißer am Boden gezogen bzw. geschoben wird.

Die Aufgabe der Erfindung wird durch einen Schleifschutz zur Befestigung und zum Schutz des Gehäuses in Form einer Platte gebildet, welche Platte an einer Außenseite bzw. dem zu schützenden Gehäuse abgewandten Seite mit Erhöhungen zur Verringerung einer Auflagefläche und eines Reibungswiderstandes versehen ist. Vorteilhaft ist hierbei, dass das Gehäuse am Untergrund bzw. am Boden beispielsweise an die für einen Schweißvorgang geeignete Position geschoben bzw. gezogen werden kann, ohne das Gehäuse zu beschädigen. Somit wird der Lack des Gehäuses nicht beschädigt und das Gehäuse bleibt weiterhin insbesondere gegen Korrosion geschützt. Ebenso wird durch den Schleifschutz eine stabile Auflage geschaffen, wenn das Gehäuse zur Seite gekippt wird. Beispielsweise kann ein Drahtvorschubgerät zum Wechseln der darin angeordneten Drahtrolle auf den Schleifschutz gekippt werden.

Vorteilhafterweise sind die Erhöhungen an die Richtung der zu erwartenden Positionsveränderung angepasst. Derartige Erhöhungen sind einfach zu realisierende Elemente zur Verringerung der Auflagefläche und des Reibungswiderstandes.

Wenn die Erhöhungen kegelförmig ausgebildeten Querschnitt aufweisen, wird in vorteilhafter Weise eine Verringerung des Reibungswiderstandes erreicht. Bei derartigen Erhöhungen ist auch von Vorteil, dass die Position des Gehäuses nicht so leicht ungewollt verändert werden kann, wie dies beispielsweise bei Rollen der Fall wäre.

Die Befestigung des Schleifschutzes erfolgt vorzugsweise über die Innenseite bzw. die dem zu schützenden Gehäuse zugewandte Seite. Durch entsprechende Ausgestaltung kann die Neigung des Schleifschutzes eingestellt werden. Durch eine lösbare Befestigung des Schleifschutzes kann dieser leicht ausgetauscht werden.

In vorteilhafter Weise wird durch die Maßnahme, dass die Erhöhungen lösbar am Schleifschutz befestigt sind, erreicht, dass die Schleifkufen einzeln ausgetauscht werden können. Dadurch kann für die Schleifkufen auch ein anderes Material verwendet werden, welches beispielsweise den Reibungswiderstand noch weiter verringert oder langsamer verschleißt.

Die Form des Schleifschutzes ist vorzugsweise an die Form des zu schützenden Gehäuses, beispielsweise an die Form einer Seitenwand des zu schützenden Gehäuses angepasst.

Weitere Vorteile können aus der Beschreibung entnommen werden.

Die vorliegende Erfindung wird anhand der beigefügten, schematischen Zeichnungen näher erläutert, wobei die in der gesamten Beschreibung enthaltenen Offenbarungen sinngemäß auf gleiche Teile mit gleichen Bezugszeichen übertragen werden können. Weiters können auch Einzelmerkmale aus dem gezeigten Ausführungsbeispiel bzw. aus den gezeigten Ausführungsbeispielen für sich eigenständige, erfindungsgemäße Lösungen darstellen.

Darin zeigen:
- Fig. 1: eine schematische Darstellung einer Schweißanlage bzw. eines Schweißgerätes;
- Fig. 2: eine schematische Darstellung eines Drahtvorschubgeräts in Schrägansicht;
- Fig. 3: eine schematische Darstellung des Drahtvorschubgeräts mit dem erfindungsgemäßen Schleifschutz in Schrägansicht;
- Fig. 4: eine schematische Darstellung des Drahtvorschubgeräts mit dem erfindungsgemäßen Schleifschutz in Vorderansicht;
- Fig. 5: eine schematische Darstellung des Drahtvorschubgeräts mit dem aufgeklappten, erfindungsgemäßen Schleifschutz in Vorderansicht;
- Fig. 6: eine schematische Darstellung des auf den erfindungsgemäßen Schleifschutz gekippten Drahtvorschubgeräts;
- Fig. 7: eine schematische Schnittdarstellung des Schleifschutzes; und
- Fig. 8: eine dreidimensionale, schematische Darstellung des Schleifschutzes.

Einführend wird festgehalten, dass gleiche Teile des Ausführungsbeispiels mit gleichen Bezugszeichen versehen werden.

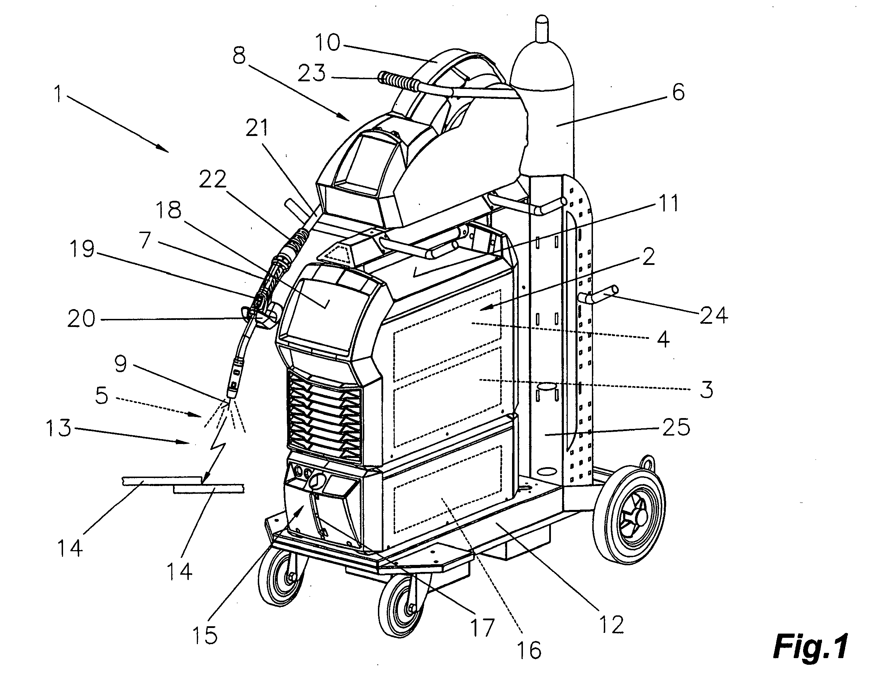

In Fig. 1 ist ein Schweißgerät 1 bzw. eine Schweißanlage für verschiedenste Prozesse bzw. Verfahren, wie z.B. MIG/MAG-Schweißen bzw. WIG/TIG-Schweißen oder Elektroden-Schweißverfahren, Doppeldraht/Tandem-Schweißverfahren, Plasma- oder Lötverfahren usw., gezeigt.

Das Schweißgerät 1 umfasst eine Stromquelle 2 mit einem darin angeordneten Leistungsteil 3, einer Steuervorrichtung 4 und weiteren nicht dargestellten Komponenten und Leitungen, wie beispielsweise einem Umschaltglied, Steuerventile, usw. Die Steuervorrichtung 4 ist beispielsweise mit einem Steuerventil verbunden, welches in einer Versorgungsleitung für ein Gas 5, insbesondere ein Schutzgas, wie beispielsweise CO₂, Helium oder Argon und dergl., zwischen einem Gasspeicher 6 und einem Schweißbrenner 7 bzw. einem Brenner angeordnet ist.

Zudem kann über die Steuervorrichtung 4 noch ein Drahtvorschubgerät 8, welches für das MIG/MAG-Schweißen üblich ist, angesteuert werden, wobei über eine Versorgungsleitung ein Zusatzwerkstoff bzw. ein Schweißdraht 9 von einer Vorratstrommel 10 bzw. einer Drahtrolle in den Bereich des Schweißbrenners 7 zugeführt wird. Selbstverständlich ist es möglich, dass das Drahtvorschubgerät 8, wie es aus dem Stand der Technik bekannt ist, im Schweißgerät 1, insbesondere im Gehäuse 11 der Stromquelle 2, integriert ist und nicht, wie in Fig. 1 dargestellt, als Zusatzgerät auf einem Fahrwagen 12 positioniert ist. Dabei ist es auch möglich, dass das Drahtvorschubgerät 8 direkt auf das Schweißgerät 2 aufgesetzt werden kann, d.h., dass das Gehäuse 11 der Stromquelle 2 auf der Oberseite zur Aufnahme des Drahtvorschubgerätes 8 ausgebildet ist, sodass der Fahrwagen 12 entfallen kann. Zur Positionierung des Drahtvorschubgeräts 8 weist dieses einen Griff 23 auf.

Es ist auch möglich, dass das Drahtvorschubgerät 8 den Schweißdraht 9 bzw. den Zusatzwerkstoff außerhalb des Schweißbrenners 7 an die Prozessstelle zuführt, wobei hierzu im Schweißbrenner 7 bevorzugt eine nicht abschmelzende Elektrode angeordnet ist, wie dies beim WIG/TIG-Schweißen üblich ist.

Der Strom zum Aufbauen eines Lichtbogens 13, insbesondere eines Arbeitslichtbogens, zwischen der Elektrode bzw. dem Schweißdraht 9 und einem bevorzugt aus einem oder mehreren Teilen gebildeten Werkstück 14 wird über eine Schweißleitung, nicht dargestellt, vom Leistungsteil 3 der Stromquelle 2, dem Schweißbrenner 7, insbesondere der Elektrode bzw. dem Schweißdraht 9, zugeführt, wobei das zu verschweißende Werkstück 14 über eine weitere Schweißleitung für das weitere Potential, insbesondere das Masse-Kabel, mit der Stromquelle 2, nicht dargestellt, verbunden ist und somit über den Lichtbogen 13 bzw. den gebildeten Plasmastrahl für einen Prozess ein Stromkreis aufgebaut werden kann. Bei Verwendung eines Brenners mit internen Lichtbogen 13 sind die beiden Schweißleitungen, nicht dargestellt, zum Brenner geführt, sodass im Brenner ein entsprechender Stromkreis aufgebaut werden kann, wie dies bei Plasma-Brennern der Fall sein kann.

Zum Kühlen des Schweißbrenners 10 kann über ein Kühlgerät 15 der Schweißbrenner 7 unter Zwischenschaltung ev. Komponenten, wie beispielsweise eines Strömungswächters mit einem Flüssigkeitsbehälter, insbesondere eines Wasserbehälters 16 mit einer Füllstandsanzeige 17, verbunden werden, wodurch bei der Inbetriebnahme des Schweißbrenners 10 des Kühlgeräts 15, insbesondere eine für die im Wasserbehälter 16 angeordnete Flüssigkeit verwendete Flüssigkeitspumpe, gestartet wird und somit eine Kühlung des Schweißbrenners 7 bewirkt werden kann. Wie bei dem dargestellten Ausführungsbeispiel gezeigt, wird das Kühlgerät 15 auf dem Fahrwagen 12 positioniert, auf das anschließend die Stromquelle 2 gestellt wird. Die einzelnen Komponenten der Schweißanlage, also die Stromquelle 2, das Drahtvorschubgerät 8 und das Kühlgerät 15, sind dabei derart ausgebildet, dass diese entsprechende Vorsprünge bzw. Ausnehmungen aufweisen, sodass sie sicher aufeinander gestapelt bzw. aufeinander gestellt werden können.

Das Schweißgerät 1, insbesondere die Stromquelle 2, weist weiters eine Ein- und/oder Ausgabevorrichtung 18 auf, über die die unterschiedlichsten Schweißparameter, Betriebsarten oder Schweißprogramme des Schweißgerätes 1 eingestellt bzw. aufgerufen und angezeigt werden können. Dabei werden die über die Ein-und/oder Ausgabevorrichtung 18 eingestellten Schweißparameter, Betriebsarten oder Schweißprogramme an die Steuervorrichtung 4 weitergeleitet und von dieser werden anschließend die einzelnen Komponenten der Schweißanlage bzw. des Schweißgerätes 1 angesteuert bzw. entsprechende Sollwerte für die Regelung oder Steuerung vorgegeben. Hierbei ist es auch möglich, dass bei Verwendung eines entsprechenden Schweißbrenners 7 auch Einstellvorgänge über den Schweißbrenner 7 vorgenommen werden können, wobei dazu der Schweißbrenner 7 mit einer Schweißbrenner-Ein- und/oder Ausgabevorrichtung 19 ausgestattet ist. Bevorzugt ist dabei der Schweißbrenner 7 über einen Datenbus, insbesondere einen seriellen Datenbus, mit dem Schweißgerät 1, insbesondere der Stromquelle 2 oder dem Drahtvorschubgerät 8 verbunden. Zum Starten des Schweißprozesses weist der Schweißbrenner 7 meist einen Startschalter, nicht dargestellt, auf, sodass durch Betätigen des Startschalters der Lichtbogen 13 gezündet werden kann. Um gegen die große Hitzeeinstrahlung vom Lichtbogen 13 geschützt zu werden, ist es möglich, dass der Schweißbrenner 7 mit einem Hitzeschutzschild 20 ausgestattet wird.

Weiters ist in dem dargestellten Ausführungsbeispiel der Schweißbrenner 7 über ein Schlauchpaket 21 mit dem Schweißgerät 1 bzw. der Schweißanlage verbunden, wobei das Schlauchpaket 21 über einem Knickschutz 22 am Schweißbrenner 7 befestigt ist. In dem Schlauchpaket 21 sind die einzelnen Leitungen, wie beispielsweise die Versorgungsleitung bzw. Leitungen für den Schweißdraht 9, für das Gas 8, für den Kühlkreislauf, für die Datenübertragung, usw., vom Schweißgerät 1 zum Schweißbrenner 10 angeordnet, wogegen das Masse-Kabel bevorzugt extra an der Stromquelle 2 angeschlossen wird. Das Schlauchpaket 21 wird über eine Kupplungsvorrichtung, nicht dargestellt, an der Stromquelle 2 oder dem Drahtvorschubgerät 8 angeschlossen, wogegen die einzelnen Leitungen im Schlauchpaket 21 mit einem Knickschutz am bzw. im Schweißbrenner 7 befestigt sind. Damit eine entsprechende Zugentlastung des Schlauchpaketes 20 gewährleistet ist, kann das Schlauchpaket 21 über eine Zugentlastungsvorrichtung, nicht dargestellt, mit dem Gehäuse 11 der Stromquelle 2 oder dem Drahtvorschubgerät 8 verbunden sein.

Grundsätzlich ist zu erwähnen, dass für die unterschiedlichen Schweißverfahren bzw. Schweißgeräte 1, wie beispielsweise WIG-Geräte oder MIG/MAG-Geräte oder Plasmageräte, nicht alle zuvor benannten Komponenten verwendet bzw. eingesetzt werden müssen. Hierzu ist es beispielsweise möglich, dass der Schweißbrenner 10 als luftgekühlter Schweißbrenner 10 ausgeführt werden kann, sodass beispielsweise das Kühlgerät 15 entfallen kann. Man kann also sagen, dass das Schweißgerät 1 zumindest durch die Stromquelle 2, das Drahtvorschubgerät 8 und das Kühlgerät 15 gebildet wird, wobei diese auch in einem gemeinsamen Gehäuse 11 angeordnet sein können. Weiters ist es möglich, dass noch weitere Teile bzw. Komponenten, wie beispielsweise Optionsträger 24, eine Haltevorrichtung 25 für den Gasspeicher 6, usw. angeordnet bzw. eingesetzt werden können.

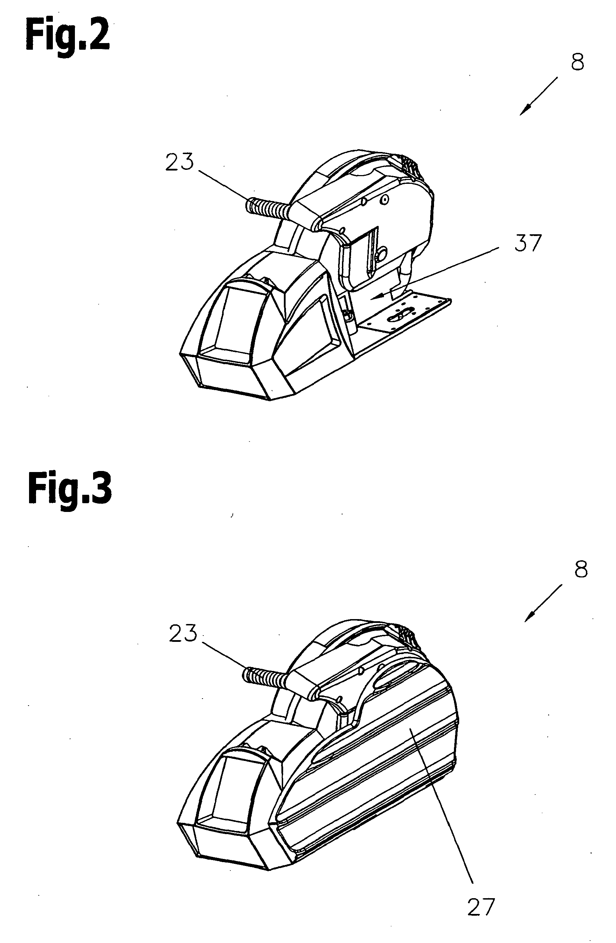

Aus dem Stand der Technik ist demnach allgemein bekannt, dass ein Schweißer für das MIG/MAG-Schweißen zumindest das Schweißgerät 1, das Drahtvorschubgerät 8 und das Schlauchpaket 21 mit dem Schweißbrenner 7 benötigt. Bei vielen Anwendungen, wie beispielsweise auf einer Schiffswerft oder bei Arbeiten auf einer Baustelle, wird das Schweißgerät 1 an einem geschützten Platz positioniert, sodass der Schweißer im Wesentlichen mit dem Drahtvorschubgerät 8 und dem Schweißbrenner 7 an seinem Arbeitsplatz ist. Dabei ist entsprechend das Schlauchpaket 21 am Drahtvorschubgerät 8 angeschlossen und das Drahtvorschubgerät 8 mit dem Schweißgerät 1 verbunden. Daraus resultiert, dass durch die Positionierung des Drahtvorschubgeräts 8 und der Länge des Schlauchpakets 21 die Größe des Arbeitsplatzes definiert ist. Ist demnach eine Schweißung außerhalb des Arbeitsplatzes durchzuführen, muss die Position des Drahtvorschubgerätes 8 verändert werden. Dies erfolgt in der Praxis derart, dass der Schweißer am Schlauchpaket 21 bzw. am Schweißbrenner 7 anzieht, sodass das Drahtvorschubgerät 8 mitgezogen wird. Dies ist entsprechend solange möglich, bis die Leitung - welche das Drahtvorschubgerät 8 mit dem Schweißgerät 1 verbindet - gespannt ist. Damit das Drahtvorschubgerät 8 nicht ungewollt seine Position verändert, steht dieses bevorzugt auf an einer Grundplatte angeordneten Füßen und nicht auf Rollen. Dabei besteht die Standfläche der Füße meist aus Gummi. Demzufolge ist bei der Veränderung der Position des Drahtvorschubgeräts 8 durch Ziehen am Schlauchpaket 21 ein gewisser Reibungswiderstand zwischen dem Boden und den Füßen des Drahtvorschubgeräts 8 zu überwinden, wobei das Drahtvorschubgerät 8 leicht kippen kann und in weiterer Folge an einer Seitenwand eines Gehäuses 26 - gemäß Fig. 2 - gezogen wird. Dieses Gehäuse 26 des Drahtvorschubgeräts 8 wird dabei entsprechend beschädigt.

Erfindungsgemäß ist daher vorgesehen, dass ein Schleifschutz 27 am Gehäuse 26 befestigbar ist. Dazu ist der Schleifschutz 27 durch eine Platte 28 gebildet, welche an einer Außenseite 29 bzw. dem zu schützenden Gehäuse 26 abgewandten Seite zumindest zwei Erhöhungen 30 zur Verringerung der Auflagefläche und des Reibungswiderstandes aufweist. Dabei bildet jede Erhöhung eine Fläche 31, wobei das mit dem Schleifschutz 27 verbundene Gehäuse 26 gemeinsam auf diesen Flächen 31 aufliegt und gezogen werden kann, ohne dass das Gehäuse 26 beschädigt wird. Das Gehäuse 26 kann in die Richtung befördert werden, in welche der Schweißer das Schlauchpaket 21 zieht.

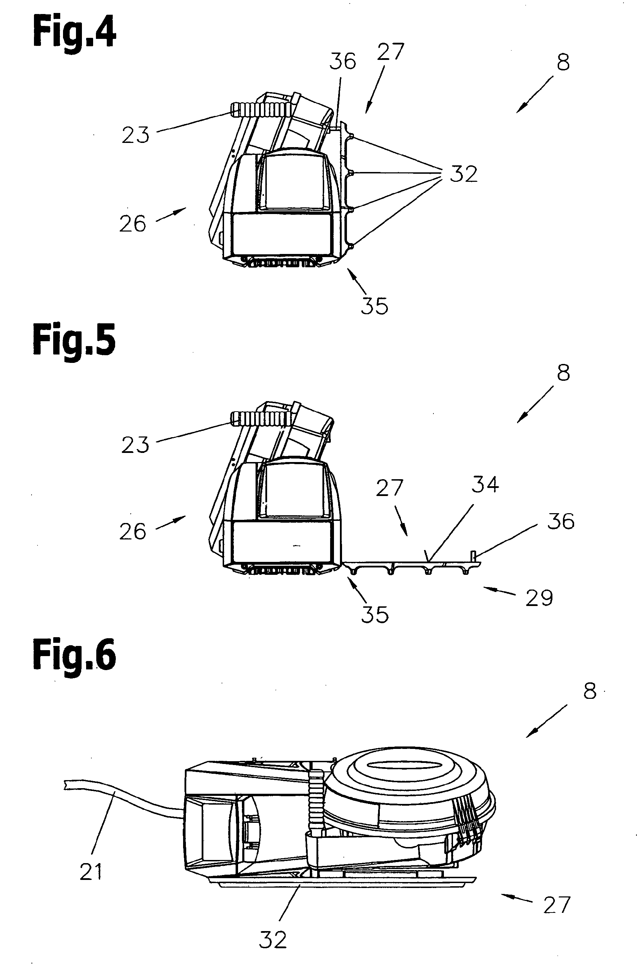

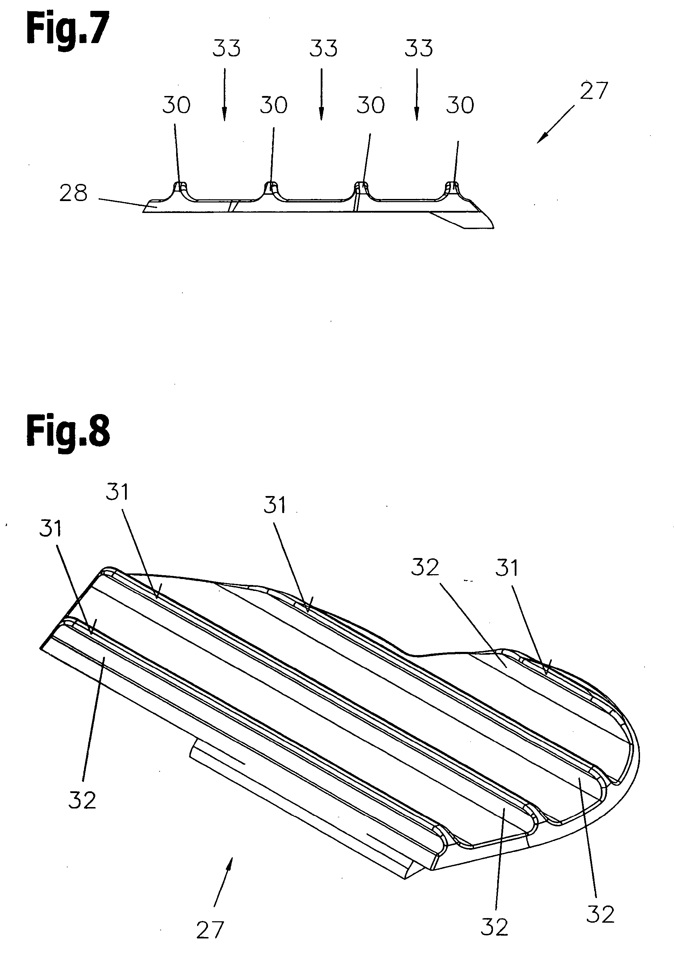

Im Detail ist der erfindungsgemäße Schleifschutz 27 nun anhand der Zusammenschau der Fig. 2 bis 8 beschrieben.

In Fig. 3 ist ein Schleifschutz 27 gezeigt, welcher an einer Seitenwand des Drahtvorschubgeräts 8 befestigt ist. Die Außenseite 29 der den Schleifschutz 27 bildenden Platte 28 weist mehrere Erhöhungen 30 zur Verringerung der Auflagefläche und des Reibungswiderstandes auf. Die Erhöhungen 30 heben sich entsprechend von der Platte 28 ab. Die Anordnung der Erhöhungen 30 ist so gewählt, dass das Gehäuse 26 ohne großen Reibungswiderstand in eine bevorzugte Richtung gezogen werden kann. Das Gehäuse 26 bzw. das Drahtvorschubgerät 8 kann also über den Schleifschutz 27 am Boden gezogen bzw. geschliffen werden. Ebenso ist die Anordnung derart gewählt, dass das Gehäuse 26 auch stabil stehen kann. Beispielsweise (wie dargestellt) erstrecken sich die Erhöhungen 30 über die Länge der Platte 28, sodass sogenannte Schleifkufen 32 gebildet werden. Die Schleifkufen 32 verlaufen im Wesentlichen parallel zueinander und berühren demnach den Boden. Des Weiteren ist zwischen den Schleifkufen 32 ein Abstand 33 vorgesehen, sodass auch dadurch der Reibungswiderstand minimiert wird. Da das Schlauchpaket 21 an einem Ende der Längsseite der Platte 28, also an der Vorderseite des Drahtvorschubgeräts 8 befestigt ist, erstrecken sich die Schleifkufen in Richtung Schlauchpaket 21. Somit bewegt sich das Gehäuse 26 in Richtung des Schlauchpakets 21, wenn an diesem gezogen wird.

Wird nun das Gehäuse 26 von dessen Grundplatte auf die Schleifkufen 32 gekippt, kann dieses in einfacher Weise gezogen werden. Dabei wird das Gehäuse 26 nicht beschädigt und durch den stark verringerten Reibungswiderstand die Beanspruchung der Verbindung zwischen Schlauchpaket 21 und Drahtvorschubgerät 8 minimal gehalten. Das Drahtvorschubgerät 8 wird also bei der Positionierung am Arbeitsplatz auf die Schleifkufen 32 des Schleifschutzes 27 gestellt, sodass das Gehäuse 26 später bei Bedarf nachgezogen werden kann. Dadurch, dass durch die Schleifkufen 32 eine Richtung vorgegeben wird, in welche das Gehäuse 26 gezogen werden kann, wird auch eine ungewollte Veränderung der Position verhindert, da beim Ziehen bzw. Bewegen quer zu den Schleifkufen 32 ein höherer Reibungswiderstand resultiert. Zusätzlich ermöglichen die Schleifkufen 32 in einfacher Weise eine vom Schweißer gewollte Richtungsänderung, da die Auflagefläche sehr gering ist. Die Schleifkufen 32 können kegelförmigen, halbrunden oder dergleichen Querschnitt aufweisen, durch welchen der Reibungswiderstand weiter verringert wird.

Die Befestigung des Schleifschutzes 27 erfolgt über eine Innenseite 34 bzw. eine dem zu schützenden Gehäuse 26 zugewandte Seite der Platte 28, an welcher entsprechende Mittel 35 zur Befestigung angeordnet sind. Beispielsweise werden als Mittel 35 zur Befestigung Scharniere und ein Klemmmechanismus 36 eingesetzt. Dabei sind die Scharniere im Wesentlichen an der Grundplatte des Gehäuses 26, an welcher auch die Füße befestigt sind, also unten, befestigt. Entsprechend ist der Klemmmechanismus 36 oben, beispielsweise hinter der Vorratstrommel 10, angeordnet, sodass der Schleifschutz 27 aufgeklappt werden kann. Dabei sind die Scharniere und der Schleifschutz 27 derart aufeinander abgestimmt, dass sich der Schleifschutz 27 vollständig öffnen lässt. Das heißt, dass der Schleifschutz 27 im Wesentlichen eine Linie mit der Grundplatte des Gehäuses 26 bildet.

Das Aufklappen des Schleifschutzes 27 ermöglicht in einfacher Weise den Anschluss der Zuleitungen (Gas, Strom, Daten, Luft, usw.) des Schweißgeräts 1, da die Zugänglichkeit verbessert wird. Dies ist erforderlich, da die Anschlüsse 37 für die Zuleitungen im Wesentlichen unterhalb des Griffs 23 des Drahtvorschubgerätes 8 - also im Wesentlichen in der Mitte - angeordnet sind. Gleichzeitig sind diese Anschlüsse durch den Schleifschutz 27 sowohl beim Ziehen als auch beim Stehen des Gehäuses 26 geschützt.

Durch die Möglichkeit des Aufklappens kann ein Klemmmechanismus 36 verwendet werden, mit welchem der Schleifschutz 27 in einem bestimmten Winkel befestigt werden kann. Somit kann der Schweißer den Schleifschutz 27 flexibel an die Gegebenheiten des Arbeitsplatzes anpassen.

Es kann aber auch beispielsweise der gesamte Schleifschutz 27 mit mehreren Klemmmechanismen 36 am Gehäuse 26 befestigt sein, sodass der Schleifschutz 27 auf das Gehäuse 26 aufsteckbar ist. Die Befestigung des Schleifschutzes 27 ist bevorzugt lösbar ausgeführt, sodass der Schleifschutz 27 schnell und einfach gewechselt werden kann. Beispielsweise wird ein Wechsel erforderlich, wenn die Erhöhungen der Schleifkufen 32 abgeschliffen und nicht mehr erkennbar sind.

Selbstverständlich können auch nur die Schleifkufen 32 ausgetauscht werden, wenn diese lösbar mit der Platte 28 verbunden sind. Beispielsweise kann die lösbare Verbindung der Schleifkufen 32 an der Platte 28 durch Schraubverbindungen oder Steckverbindungen realisiert sein. Hierbei besteht auch die Möglichkeit, dass die Schleifkufen 32 aus einem anderen Material gefertigt sind als die Platte 28. Somit können die Schleifkufen 32 beispielsweise an die Beschaffenheit des Bodens angepasst werden.

Ebenso ist der Schleifschutz 27 nicht auf die Befestigung an der Seitenwand des Gehäuses 26 beschränkt. Auch kann der Schleifschutz 27 an der Grundplatte oder an einem Deckel des Gehäuses 26 befestigt werden. Bevorzugt wird der Schleifschutz 27 an jener Seitenwand des Gehäuses 26 befestigt, an welcher der Schwerpunkt des Gehäuses 26 liegt. Dadurch wird gewährleistet, dass beim Ziehen die Gefahr des Umkippens minimal gehalten wird.

Bevorzugt wird die Form des Schleifschutzes 27 an die Form jener Seitenwand des Gehäuses 26 angepasst, an welcher dieser befestigt werden soll. Auch wird dadurch die äußere Erscheinungsform im Wesentlichen nicht verändert. Dadurch ist auch gewährleistet, dass das Gehäuse 26 auch auf den Schleifkufen 27 stabil steht. Um diese Stabilität auch bei einem kleinen Gehäuse 26 zu gewährleisten, kann selbstverständlich der Schleifschutz 27 größer als das Gehäuse 26 ausgebildet werden. Je nach Bedarf kann der Schleifschutz 27 selbstverständlich aber auch kleiner als das Gehäuse 26 sein bzw. eine andere Form als das Gehäuse 26 aufweisen.

Beispielsweise ermöglicht der Schleifschutz 27 des Weiteren auch, dass die Vorratstrommel 10 des Drahtvorschubgeräts 8 sehr einfach gewechselt werden kann, da dies nicht von der Seite, sondern von oben durchgeführt werden kann.

Selbstverständlich kann an der linken Seitenwand, der rechten Seitenwand und unten an der Grundplatte des Gehäuses 26 gleichzeitig jeweils ein Schleifschutz 27 angebracht werden. Somit kann das Gehäuse 26 im Wesentlichen in jeder Lage gezogen werden, ohne dieses zu beschädigen. Dementsprechend kann auch ein einziger Schleifschutz 27 für die zwei Seitenwände und die Grundplatte verwendet werden.

Ebenso kann der Schleifschutz 27 auch an einer Seite eines Gehäuses 11 des Schweißgeräts 1 bzw. der Stromquelle 2 befestigt werden. Dies ist beispielsweise bei einem so genannten Elektrodenschweißgerät der Fall, bei welchem kein Drahtvorschubgerät 8 erforderlich ist.

Zusammenfassend kann gesagt werden, dass mit der erfindungsgemäßen Vorrichtung die Möglichkeit geschaffen wird, ein Gehäuse 26 bzw. ein Gehäuse 11 über den Boden zu ziehen, ohne dabei das Gehäuse 26 zu beschädigen. Des Weiteren stellen kleine Hindernisse am Boden kein Problem dar, da diese zwischen die Schleifkufen 32 gedrängt werden.

## Patentansprüche

1. Schweißkomponente mit einer Vorrichtung zum Schutz dessen Gehäuses (26) während einer Veränderung dessen Position, **dadurch gekennzeichnet, dass** ein Schleifschutz (27) zur Befestigung und zum Schutz des Gehäuses (26) in Form einer Platte (28) vorgesehen ist, welche Platte (28) an einer Außenseite (29) mit Erhöhungen (30) zur Verringerung einer Auflagefläche und eines Reibungswiderstandes versehen ist.

2. Schweißkomponente nach Anspruch 1, **dadurch gekennzeichnet, dass** die Erhöhungen (30) an die Richtung der zu erwartenden Positionsveränderung angepasst ist.

3. Schweißkomponente nach Anspruch 1 oder 2, **dadurch gekennzeichnet, dass** die Erhöhungen kegelförmig ausgebildeten Querschnitt aufweisen.

4. Schweißkomponente nach einem der Ansprüche 1 bis 3, **dadurch gekennzeichnet, dass** sich jede Erhöhung (30) über die Länge des Schleifschutzes (27) erstreckt und die Erhöhungen (30) in einem Abstand (33) zueinander angeordnet sind.

5. Schweißkomponente nach einem der Ansprüche 1 bis 4, **dadurch gekennzeichnet, dass** an einer Innenseite des Schleifschutzes (27) Mittel (35) zur Befestigung am Gehäuse (26) angeordnet sind.

6. Schweißkomponente nach Anspruch 5, **dadurch gekennzeichnet, dass** Befestigungsmittel (35) zur lösbaren Befestigung des Schleifschutzes (27) am Gehäuse (26) ausgebildet sind.

7. Schweißkomponente nach einem der Ansprüche 1 bis 6, **dadurch gekennzeichnet, dass** die Erhöhungen (30) lösbar am Schleifschutz (27) befestigt sind.

8. Schweißkomponente nach einem der Ansprüche 1 bis 7, **dadurch gekennzeichnet, dass** die Form des Schleifschutzes (27) an die Form des zu schützenden Gehäuses (26) angepasst ist.

9. Schweißkomponente nach Anspruch 8, **dadurch gekennzeichnet, dass** der Schleifschutz (27) an die Form einer Seitenwand des zu schützenden Gehäuses (26) angepasst ist.

## Claims

1. A welding component including a device for protecting its housing (26) while changing the position thereof, **characterized in that** a drag protection (27) in the form of a plate (28) is provided for fastening and for protecting the housing (26), which plate (28) is provided on an outer side (29) with elevations (30) for reducing a bearing surface and a friction resistance.

2. A welding component according to claim 1, **characterized in that** the elevations (30) are adapted to the direction of the change of position to be expected.

3. A welding component according to claim 1 or 2, **characterized in that** the elevations have conically shaped cross sections.

4. A welding component according to any one of claims 1 to 3, **characterized in that** each of the elevations (30) extends over the length of the drag protection (27), and the elevations (30) are disposed in a mutually spaced-apart manner (33).

5. A welding component according to any one of claims 1 to 4, **characterized in that** means (35) for fastening the drag protection (27) to the housing (26) are disposed on an inner side of the same.

6. A welding component according to claim 5, **characterized in that** fastening means (35) for detachably fastening the drag protection (27) to the housing (26) are provided.

7. A welding component according to any one of claims 1 to 6 **characterized in that** the elevations (30) are detachably fastened to the drag protection (27).

8. A welding component according to any one of claims 1 to 7, **characterized in that** the shape of the drag protection (27) is adapted to the shape of the housing (26) to be protected.

9. A welding component according to claim 8, **characterized in that** the drag protection (27) is adapted to the shape of a side wall of the housing (26) to be protected.

## Revendications

1. Composant de soudure avec un dispositif de protection de son boîtier (26) lors d'une modification de sa position, **caractérisé en ce qu'**une protection anti-usure par frottement (27) est prévue, pour la fixation et la protection du boîtier (26), sous forme d'une plaque (28), cette plaque (28) étant munie, sur un côté extérieur (29), de saillies (30) permettant la réduction d'une surface d'appui et d'une résistance au frottement.

2. Composant de soudure selon la revendication 1, **caractérisé en ce que** les saillies (30) sont adaptées à la direction de la modification de position prévue.

3. Composant de soudure selon la revendication 1 ou 2, **caractérisé en ce que** les saillies présentent une section de forme conique.

4. Composant de soudure selon l'une des revendications 1 à 3, **caractérisé en ce que** chaque saillie (30) s'étend sur la longueur de la protection anti-usure par frottement (27) et les saillies (30) sont disposées à une certaine distance (33) entre elles.

5. Composant de soudure selon l'une des revendications 1 à 4, **caractérisé en ce que**, sur un côté intérieur de la protection anti-usure par frottement (27) se trouvent des moyens (35) permettant la fixation sur le boitier (26).

6. Composant de soudure selon la revendication 5, **caractérisé en ce que** des moyens de fixation (35) sont conçus pour la fixation amovible de la protection anti-usure par frottement (27) sur le boîtier (26).

7. Composant de soudure selon l'une des revendications 1 à 6, **caractérisé en ce que** les saillies (30) sont fixées de manière amovible à la protection anti-usure par frottement (27).

8. Composant de soudure selon l'une des revendications 1 à 7, **caractérisé en ce que** la forme de la protection anti-usure par frottement (27) est adaptée à la forme du boîtier (26) à protéger.

9. Composant de soudure selon la revendication 8, **caractérisé en ce que** la protection anti-usure par frottement (27) est adaptée à la forme d'une paroi latérale du boîtier (26) à protéger.
